# EUROPÄISCHE PATENTSCHRIFT

(11) **EP 2 902 345 B1**
(45) Veröffentlichungstag und Bekanntmachung des Hinweises auf die Patenterteilung: **01.03.2023**
(21) Anmeldenummer: 14193334.1
(22) Anmeldetag: 14.11.2014
(51) Int. Cl.: B65G 23/08

(54) **Trommelmotor für lärmempfindliche Umgebung**
Drum motor for noise-sensitive environment
Moteur à barillet pour environnement sensible au bruit

(30) Priorität: 30.01.2014 DE 202014000757 U
(43) Veröffentlichungstag der Anmeldung: 05.08.2015
(73) Patentinhaber: Interroll Holding AG, 6592 Sant' Antonino (CH)
(72) Erfinder: Dudek, Siegmund, 52525 Heinsberg (DE); Wolters, Thomas, 41366 Schwalmtal (DE)
(74) Vertreter: Kohlhof, Stephan

(56) Entgegenhaltungen:
- WO-A1-2004/045995
- CN-A- 103 343 783
- CN-U- 202 251 508
- DE-A1- 10 146 138
- DE-A1-102006 049 327
- DE-U1-202012 005 380
- JP-A- 2006 250 275
- US-A1- 2008 035 414
- US-A1- 2011 062 000
- US-B1- 6 183 368

## Beschreibung

Die Erfindung betrifft eine Fördereinrichtung umfassend eine Achse, die sich entlang einer Längsachse erstreckt, einen Trommelkörper, der auf der Achse drehbar um die Längsachse gelagert ist, Eine Antriebseinheit mit einem elektrischen Antriebsmotor, die innerhalb des Trommelkörpers angeordnet ist und der einen Rotor und einen Stator umfasst, wobei der Rotor mit einer um eine Antriebsachse drehbar gelagerten Antriebsausgangswelle drehmomentfest gekoppelt ist und der Stator eine Drehmomentstütze darstellt und mit der Achse drehmomentfest gekoppelt ist, ein Verbindungselement, das innerhalb des Trommelkörpers angeordnet ist und drehmomentfest mit dem Trommelkörper und der Antriebsausgangswelle des Antriebsmotors gekoppelt ist.

Fördereinrichtungen dieser Art werden für verschiedene Einsatzzwecke und in verschiedenen Bauformen verwendet. Eine erfindungsgemäße Fördereinreichtung kann beispielsweise ein Trommelmotor oder ein Rollenantrieb sein. Trommelmotoren werden beispielsweise dazu eingesetzt, um in einem Gestell mittels der Achse montiert zu werden, die dann ortsfest zum Gestell und drehmomentfest am Gestell befestigt ist. Der an der Achse drehbar gelagerte Trommelkörper wird mittels der innerhalb des Trommelkörpers liegenden Antriebseinheit angetrieben und in Rotation versetzt. Die Antriebseinheit stützt sich über die Achse ab und ist abtriebsseitig mit dem Trommelkörper verbunden. Der Trommelmotor kann dazu dienen, mittels eines Riementriebs oder der Gleichen andere Einrichtungen anzutreiben, beispielsweise eine aus mehreren Förderrollen bestehende Förderstrecke. Weiterhin kann der Trommelmotor unmittelbar als Förderglied in eine Förderstrecke eingesetzt sein und das Fördergut tragen und durch die Rotation des Trommelkörpers fördern. Eine weitere Anwendung besteht darin, den Trommelmotor in einer Förderbandstrecke als endseitiges Antriebselement einzusetzen und ein Förderband in teilweiser Umschlingung um den Trommelkörper zu führen und dieses durch die Rotation des Trommelkörpers in Bewegung zu versetzen.

Trommelmotoren sind im Stand der Technik in unterschiedlichen Antriebsleistungen vorbekannt. Diese Antriebsleistungen reichen von etwa 10 W bis 6 KW und können über den Trommelkörper ein Drehmoment bis zu 1000 Nm übertragen. Trommelmotoren zeichnen sich dabei bauartbedingt durch die spezifische Problematik einer schwierigen Wärmeabfuhr der Verlustwärme der Antriebseinrichtung aus, die für die kompakte Bauform innerhalb des Trommelkörpers angeordnet ist. Bei einigen Trommelmotoren hoher Leistungsklassen hat sich daher eine Ölfüllung des Trommelkörpers im Stand der Technik bewährt, um die thermische Stabilität des Trommelmotors auch bei hoher Last sicher zu stellen. Grundsätzlich kann aber aufgrund höherer Wirkungsgrade auf eine solche Ölfüllung auch bei Einsatz entsprechender Komponenten verzichtet werden.

Rollenantriebe sind gegenüber den Trommelmotoren regelmäßig mit einem - hier als Rollenkörper oder Rohr bezeichneten Trommelkörper mit kleinerem Durchmesser ausgerüstet und weisen typischerweise eine Leistung von weniger als 100 W auf, typisch 10 bis 40 W. Solche Rollenantriebe werden dazu eingesetzt, um in Rollenförderstrecken Fördergüter zu tragen und zu befördern. Die Rollenförderer können dabei mit mehreren parallel angeordneten Leerlaufrollen kombiniert werden, die gegebenenfalls über einen Riemenantrieb, Kettenantrieb von der motorbetriebenen oder dergleichen Förderrolle angetrieben werden. In Kurvenrollenförderern sind die Rollen mit zueinander abgewinkelten Achsen ausgeführt.

Trommelmotoren und Rollenförderantriebe werden häufig in Umgebungen eingesetzt, in denen sie zur Weiterbeförderung von Artikeln in einer Fertigung, einem logistischen Verteil-Zentrum oder einem Lager verwendet werden. In solchen Umgebungen ist es regelmäßig wünschenswert, dass durch die Förderanlagen, die dort installiert und betrieben sind, eine möglichst geringe Geräuschentwicklung erfolgt, um Personen, die im Umfeld einer solchen Fertigung oder Logistikeinrichtung arbeiten, nicht zu stören.

Es ist bekannt, Trommelmotoren und motorbetriebene Förderrollen zu diesem Zweck mit einer Antriebseinheit auszustatten, die teilweise auf Kunststoffelemente zur Kraftübertragung zurückgreift, insbesondere im Abtriebsbereich der Antriebsausgangswelle und einem dort gegebenenfalls angeordneten Getriebe. So ist beispielsweise im Stand der Technik bekannt, dass die Geräuschentwicklung von Getrieben durch die einseitige oder beidseitige Verwendung von Kunststoffzahnrädern in den Getriebeübersetzungsstufen reduziert werden kann. Nachteilig an dieser Bauweise ist allerdings, dass die übertragbaren Leistungen durch die geringere Belastbarkeit der Kunststoffzahnräder oder sonstigen Kunststoffbauteile im Antriebsstrang herabgesetzt wird und die Lebensdauer beeinträchtigt ist.

Es ist weiterhin bekannt, Trommelmotoren und motorbetriebene Förderrollen in gekapselten Bereichen zu montieren, um die Emission von Geräuschen aus Förderstrecken, die solche Trommelmotoren oder motorbetriebene Förderrollen enthalten, zu reduzieren. Eine solche gekapselte Förderstrecke ist für eine Reihe von Anwendungen praktikabel, kann jedoch dann, wenn auf die geförderten Artikel durch Personen zugegriffen werden muss, nur in sehr unpraktikabler Weise realisiert werden, um den Zugang zu den Artikeln zu erreichen. Zudem stellt die gekapselte Bauweise von Förderstrecken eine konstruktiv aufwendige und kostenintensive Lösung dar.

DE 20 2012 005 380 U1 beschreibt eine motorbetriebene Förderrolle für Förderanlagen zum Fördern von Behältern, Paletten und dergleichen mit einem Rollkörper, einer Antriebseinheit und einer Kupplungseinheit.

DE 10 2006 049 327 A1 beschreibt eine Vorrichtung zur Anordnung einer Fördereinheit an einem Transportsystem, wobei die Fördereinheit von einer elektrischen Maschine angetrieben ist. Die Fördereinheit und/oder die elektrische Maschine weisen Mittel zur Schwingungsdämpfung auf.

Der Erfindung liegt die Aufgabe zugrunde, eine Fördereinrichtung bereit zu stellen, deren Geräuschentwicklung im Betrieb gegenüber dem Stand der Technik reduziert ist.

Diese Aufgabe wird erfindungsgemäß gelöst durch eine Fördereinrichtung der eingangs beschriebenen Art, bei der zwischen die Drehmomentstütze und die Achse eine erste biegeelastische Kupplung eingesetzt ist, und zwischen die Antriebsausgangswelle und den Trommelkörper eine zweite biegeelastische Kupplung eingesetzt ist.

Der erfindungsgemäßen Fördereinrichtung liegt die Erkenntnis zugrunde, dass zwar durch Materialmodifikationen und fertigungstechnisch aufwändige Bearbeitungsweisen an der Antriebseinheit und den Lagereinrichtungen von Trommelmotoren und motorbetriebenen Förderrollen eine Geräuschreduktion erzielt werden kann. Diese Geräuschreduktion führt aber nicht zu einer wirtschaftlich effizienten Absenkung der Geräuschentwicklung weil der Fertigungsaufwand und die funktionellen Einbußen, die mit einer solchen mechanischen Feinbearbeitung beziehungsweise Materialmodifikation einhergehen, die Herstellungskosten und die Betriebskosten der Fördereinrichtung erhöhen.

Als ursächlich für eine Geräuschentwicklung hat sich eine innerhalb der Fördereinrichtung auftretende Belastung ergeben, die auf die Antriebseinheit einwirkt und zur Folge hat, dass die Antriebseinheit nicht mit der theoretisch idealen Beanspruchung und Geometrie betrieben werden kann, die sich aus der Belastung der Fördereinrichtung ergeben sollte. Stattdessen liegt der Erfindung die Erkenntnis zugrunde, dass einerseits aufgrund fertigungsbedingter Toleranzen, andererseits aufgrund den im Betrieb der Fördereinrichtung auftretenden Belastungen die Antriebseinheit mit Kräften beansprucht wird, die zu einer Erhöhung der Geräuschentwicklung führen. Diese Kräfte können einerseits aus einem Winkelversatz aufgrund der Einbaulage der Antriebseinheit innerhalb des Trommelkörpers resultieren, insbesondere aber hat eine einseitig tangential oder radial auf den Trommelkörper einwirkende Kraft, wie sie beispielsweise durch eine hohe Förderbandspannung erzeugt werden kann, wenn ein Trommelmotor in einer Förderbandstrecke eingesetzt wird, zur Folge, dass ein Winkelversatz und die Geräuschentwicklung der Fördereinrichtung sich erhöht.

Diese Erkenntnis wird erfindungsgemäß in eine verbesserte Fördereinrichtung umgesetzt, bei der durch eine beidseitige Anbindung der Antriebseinheit innerhalb des Trommelkörpers über biegeelastische Kupplungen eine Entkopplung der Antriebseinheit von solchen Querkräften erzielt wird. Ein Winkelversatz, der toleranzbedingt oder durch solche einseitig tangentialen oder radialen Kräfte hervorgerufen wird, kann aufgrund dieser Entkopplung durch die zwei biegeelastischen Kupplungen keine Querkräfte auf die Antriebseinheit bewirken. Die auf die Antriebseinheit einwirkenden Querkräfte werden durch die Entkopplung maßgeblich reduziert. Bei der erfindungsgemäßen Fördereinrichtung kann die Antriebseinheit daher in einer gegenüber Winkelversatz entkoppelten Weise querkraftfrei oder mit nur geringen Querkräften betrieben werden und daher besonders geräuscharm laufen.

Erfindungsgemäß soll unter eine biegeelastischen Kupplung ein Bauelement zur Übertragung eines Drehmoments um eine Achse verstanden werden, welches sich gegenüber der Drehmomentübertragung um die Achse im Wesentlichen torsionssteif verhält, gegenüber Biegemomenten, die in Richtungen quer zu dieser Achse wirken, jedoch eine geringer Steifigkeit aufweisen, sich also nachgiebig, beispielsweise elastisch verhalten. Als Beispiel für eine solche biegeelastische Kupplung kann ein Gummi-Metallelement, ein Elastomer-Metallelement oder eine Scheibenkupplung dienen, ebenso ein klassisches Kardangelenk oder sonstige Bauformen, die eine solche Drehmomentsteifigkeit um und Biegenachgiebigkeit quer zu einer Drehachse aufweisen.

Unter einem Winkelversatz ist erfindungsgemäß eine Winkelabweichung zu verstehen, die sich zwischen zwei Achsen oder Achsabschnitten ergibt. Zwar ist eine Fördereinrichtung der erfindungsgemäßen Bauweise typischerweise solcher Art konstruiert, dass die Antriebsachse und die Längsachse koaxial oder parallel zueinander verlaufen. Insbesondere ist konstruktiv die Längsachse des Trommelkörpers an beiden Stirnseiten zentral durch die Achse oder Achselemente geführt, an denen der Trommelkörper drehbar gelagert ist. In der Praxis bei hoher Beanspruchung der Fördereinrichtung können sich aber von dieser koaxialen oder parallelen Ausrichtung Abweichungen ergeben. So kann beispielsweise bei Einwirkung hoher radialer Kräfte auf den Trommelkörper die Achse, um welche der Trommelkörper an einem Stirnseitenende drehbar gelagert ist, aus ihrer koaxialen Ausrichtung zur Achse, um welche der Trommelkörper an dem gegenüberliegenden Stirnseitenende gelagert ist, heraus bewegen und ein Winkel auftreten. Dieser Winkel kann durch eine Durchbiegung einer durchgehenden Achse oder insbesondere bei Verwendung einer geteilten Achse mit zwei Achsstummeln und einer Durchbiegung des Trommelkörpers oder innerhalb der Achslagerungen sich ergeben. Weiterhin kann infolge einer solchen Durchbiegung sich die Antriebsachse aus Ihrer koaxialen oder parallelen Lage zur Längsachse heraus bewegen und einen Winkel zur Längsachse aufweisen. Diese in der Praxis auftretenden Winkelabweichungen haben ungünstige Belastungsfälle auf die Antriebseinheit und die Lagerung der des Trommelkörpers zur Folge und erzeugen neben dem damit einhergehenden Verschleiß Laufgeräusche, welche die Geräuschemission der Fördereinrichtung erhöhen.

Durch die erfindungsgemäßen biegeelastischen Kupplungen werden die so auftretenden Winkelversatze zwar nicht vermieden, die aus einem solchen Winkelversatz resultierenden Beanspruchungen auf die Antriebseinheit und die Lagerungen aber signifikant herabgesetzt. Dies hat zur Folge, dass sowohl der durch den Winkelversatz auftretende Verschleiß als auch die hierdurch hervorgerufenen Geräusche maßgeblich reduziert werden.

Als weiterer Effekt hat sich ergeben, das insbesondere dann, wenn Kupplungen eingesetzt werden, die Gummielemente wie Elastomer-Metallelemente umfassen, eine akustische Entkopplung der Antriebseinheit von der Achse erzielt wird, wodurch die Körperschallübertragung über die Trommel, die Trommellagerung und die Achsen in ein Gestell, in welches die Fördereinrichtung montiert ist, signifikant herabgesetzt wird und dadurch weder der Trommelköper noch das Gestell als Schallkörper für die Geräusche aus der Antriebseinheit funktionieren kann.

Erfindungsgemäß ist unter einer Kupplung, die zwischen zwei Bauteile eingesetzt ist, eine Kupplung zu verstehen, die funktionell diese beiden Bauteile miteinander koppelt zur Übertragung eines Drehmoments. Die Kupplung kann zu diesem Zweck auch räumlich zwischen den beiden Bauteilen angeordnet sein, ebenso kann die Kupplung bei entsprechenden Drehmomentübertragung aber auch hinter oder vor den beiden Bauteilen angeordnet sein, so dass eines der beiden Bauteile zwischen dem anderen Bauteil und der Kupplung angeordnet ist. Des Weiteren sind auch ineinander greifende Anordnungen konstruktiv realisierbar, um die funktionelle Zwischenschaltung der Kupplung zwischen die beiden Bauteile räumlich umzusetzen.

Gemäß einer ersten bevorzugten Ausführungsform ist vorgesehen, dass die zweite biegeelastische Kupplung ausgebildet ist um bei Beaufschlagung mit einem Drehmoment (von beispielsweise 100Nm) um eine senkrecht zur Antriebsachse liegende Querachse einen elastischen Winkelversatz um die Querachse auszuführen, der größer ist als ein Winkelversatz um die Antriebsachse bei Aufbringen desselben Drehmoments um die Antriebsachse.

Mit diesen Eigenschaften der biegeelastischen Kupplung wird erreicht, dass die für den Antrieb des Trommelkörpers notwendige Rotation und das Drehmoment in einer steifen Übertragungsweise von der Antriebseinheit auf den Trommelkörper geleitet werden kann wohingegen Winkelabweichungen zwischen der Antriebsachse, der Längsachse oder zwischen der Längsachse im Bereich der beiden Stirnseiten zueinander durch einen geringen Biegewiderstand der Kupplung ausgeglichen werden und keine Einleitung hoher Biegekräfte in die Antriebseinheit oder die Lagereinheiten zur Drehlagerung der Trommelkörpers nach sich ziehen.

Weiterhin ist es bevorzugt, wenn die zweite biegeelastische Kupplung ausgebildet ist um bei Beaufschlagung mit einem Drehmoment von 100Nm um eine senkrecht zur Antriebsachse liegende Querachse einen elastischen Winkelversatz um die Querachse auszuführen, der größer ist als ein Winkelversatz um die Antriebsachse bei Aufbringen desselben Drehmoments um die Antriebsachse. Diese Fortbildungsform wendet die gleiche bevorzugte Auslegung auf die zweite biegeelastische Kupplung an. Dabei ist zu verstehen, dass vorzugweise sowohl die erste als auch die zweite biegeelastische Kupplung in entsprechender Weise ausgebildet sind und weiter vorzugsweise beide Kupplungen einen gleichen Winkelversatz um die Querachse und um die Antriebsachse bei dem Drehmoment aufweisen. Dies hat den Vorteil einer im Wesentlichen symmetrischen Beanspruchung und Verformung unter Last.

Es ist gemäß einer weiteren bevorzugten Ausführungsform vorgesehen, dass die Antriebseinheit ein Getriebe umfasst, welches eine Getriebeausgangswelle aufweist, der Antriebsmotor eine Motorausgangsswelle aufweist, die mit einer Getriebeeingangswelle gekoppelt ist und die Getriebeausgangswelle mit dem Verbindungselement gekoppelt ist. Durch die Bereitstellung eines Getriebes als Bestandteil der Antriebseinheit kann die Motordrehzahl untersetzt werden und ein hohes Drehmoment aus dem Antriebsmotor auf den Trommelkörper übertragen werden, was für viele Anwendungsfälle von Fördereinrichtungen bevorzugt ist. Grundsätzlich ist zu verstehen, dass die Antriebseinheit auch nur einen Antriebsmotor umfassen kann, dessen Motorausgangswelle unmittelbar auf den Trommelkörper wirkt, so dass Drehzahl des Antriebsmotors und Drehzahl des Trommelkörpers übereinstimmend sind.

Dabei ist es dann bevorzugt, wenn die zweite biegeelastische Kupplung zwischen die Getriebeausgangswelle und das Verbindungselement gekoppelt ist. Diese Ausgestaltung ermöglicht es, die Antriebseinheit bestehend aus dem Antriebsmotor und dem Getriebe als eine steife, integrale Baueinheit auszuführen und sie mittels einer biegeelastischen Kupplung auf der Abtriebsseite, also an der Getriebeausgangswelle solcher Art zu entkoppeln, dass keine Biegekräfte durch radial einwirkende Lasten auf dieser Seite in die Antriebseinheit eingeleitet werden können oder diese zumindest signifikant herabgesetzt werden.

Alternativ hierzu kann in anderen Ausführungsformen vorteilhaft vorgesehen sein, dass die zweite biegeelastische Kupplung zwischen die Motorausgangswelle und die Getriebeeingangswelle gekoppelt ist. Bei dieser Ausführungsform wird eine Winkelabweichung zwischen der Motorausgangswelle und der Getriebeeingangswelle durch die biegeelastische Kupplung zugelassen und kraftentkoppelt, wodurch Verformungen und Winkelabweichungen, die auf die Antriebseinheit wirken, auch innerhalb der Antriebseinheit durch eine entsprechende Entkopplung über die biegeelastische Kupplung ausgeglichen werden und eine Krafteinleitung hierdurch auf Getriebe oder Antriebseinheit vermieden oder signifikant reduziert wird.

Dabei ist es dann weiter bevorzugt, wenn das Getriebe ein Getriebegehäuse aufweist, in dem die Getriebeeingangswelle drehbar gelagert ist, und dass das Getriebegehäuse mit einem Motorgehäuse des Antriebsmotors mittels einer dritten biegeelastischen Kupplung drehmomentfest verbunden ist. Bei dieser Ausgestaltung wird das Getriebegehäuse, welches in typischen Anwendungen mit dem Motorgehäuse des Antriebsmotors verbunden ist, ebenfalls über eine zusätzliche biegeelastische Kupplung angeschlossen, sodass sich zwischen dem Getriebe und dem Antriebsmotors eine vollständige Entkopplung durch die zweite und die dritte biegeelastische Kupplung im Bereich der Welle und der Drehmomentabstützung der Gehäuse ergibt.

Gemäß einer weiteren bevorzugten Ausführungsform ist vorgesehen, dass die erste, zweite und/oder dritte biegeelastische Kupplung ein Gummielement zur Drehmomentübertragung um die Antriebsachse aufweist. Die Ausführung der biegeelastischen Kupplung mit einem Gummielement kann einerseits eine wirksame Entkopplung von Winkelversätzen durch elastische Verformung des Gummielements erreichen, zugleich wird durch die dämpfende Wirkung des Gummielements auch eine akustische Entkopplung des Körperschalls der beiden über die Kupplung miteinander verbundenen Bauteile voneinander erzielt.

Die Kupplung kann dabei insbesondere solcher Art ausgeführt sein, dass das Gummielement formschlüssig mit einem Kupplungseingangsträger und einem Kupplungsausgangsträger zur Drehmomentübertragung gekoppelt ist. Durch die formschlüssige Einbindung des Gummielements innerhalb der Kupplung kann eine flächige Übertragung des Drehmoments über entsprechende, sich vorzugweise radial, senkrecht zur Umfangsrichtung erstreckende Flächen erfolgen, zugleich aber durch elastische Verformung des Elastomer-Metallelements oder Gummielements oder eine translatorische Bewegung zwischen den übertragenden Flächen eine Winkelabweichung kraftfrei oder kraftreduziert durch die Kupplung ausgeglichen werden. In anderen Ausgestaltungen kann auch ein stoffschlüssiger Kontakt des Gummielements zu dem Kupplungsträger auf der Eingangs- oder Ausgangsseite vorgesehen sein.

Weiterhin ist bevorzugt vorgesehen, dass das Gummielement eine Mehrzahl von über einen Umfang der Kupplung verteilte Sektoren aufweist, die jeweils eine erste vorzugsweise senkrecht zur Umfangsrichtung ausgerichtete Kontaktffläche und eine zweite vorzugsweise senkrecht zur Umfangsrichtung ausgerichtete Kontaktfläche aufweisen und dass die erste Kontaktfläche an einer korrespondierenden Fläche des Kupplungseingangsträgers anliegt und die zweite Kontaktfläche an einer korrespondierenden Fläche des Kupplungsausgangsträgers anliegt. Das Elastomer-Metallelement bzw. Gummielement kann hierbei eine Mehrzahl von tortenstückähnlichen Sektoren aufweisen, die jeweils einseitig vom Kupplungseingangsträger und ausgangsseitlig vom Kupplungsausgangsträger eingefasst sind, sodass eine Übertragung des Drehmoments mittels sich radial und senkrecht zur Antriebsachse erstreckender Flächen am Gummielement beziehungsweise dem Kupplungseingangs- und Kupplungsausgangsträger erfolgen kann. Diese Kontaktflächen können alternativ auch schräg, wechselweise schräg oder in anderer Form angeordnet sein, wobei zumindest eine Komponente der Flächennormalen in Umfangsrichtung weisen muss, um das Drehmoment übertragen zu können.

Insbesondere ist es dabei bevorzugt, dass die Sektoren des Gummielements miteinander zu einem einstückigen Gummielement verbunden sind. Durch die Ausgestaltung des Gummielements als ein einstückiges Bauteil wird einerseits die Fertigung des Gummielements selbst, andererseits die Montage des Gummielements erleichtert und Fehler bei der Anordnung des Gummielements können vermieden werden.

Noch weiter ist es bevorzugt, wenn die Achse einen ersten Achsstummel umfasst, der an einer ersten Stirnseite des Trommelkörpers aus dem Trommelkörper herausragt und auf dem der Trommelkörper um einen ersten Abschnitt der Längsachse drehbar gelagert ist, und einen zweiten Achsstummel aufweist, der an einer der ersten Stirnseite gegenüberliegenden zweiten Stirnseite des Trommelkörpers aus dem Trommelkörper herausragt und auf dem der Trommelkörper um einen zweiten Abschnitt der Längsachse drehbar gelagert ist, und dass die erste biegeelastische Kupplung zwischen die Drehmomentstütze und den ersten Achsstummel eingesetzt ist und dass die zweite biegeelastische Kupplung zwischen die Antriebsausgangswelle und den Trommelkörper eingesetzt ist. Durch die Ausgestaltung der Fördereinrichtung mit zwei Achsstummeln kann innerhalb des Trommelkörpers ein leistungsstarker Motor angeordnet werden, der sich auf der einen Stirnseite mit einem Aktor oder Stator an dem einem Achsstummel abstützt und entsprechend mit dem Stator beziehungsweise Aktor über ein Verbindungselement mit dem Trommelkörper verbunden ist. Bei der Gestaltung der Lagerung des Trommelkörpers kann hierbei eine für die Belastungsfälle in der Praxis ideale Drehlagerung auf Gleit- oder Wälzlagern im Bereich der Stirnseiten auf den beiden Achsstummeln erfolgen. Insbesondere bei dieser Ausgestaltung ist die Ausführung mit einer biegeelastischen ersten und zweiten Kupplung besonders vorteilhaft, da hierdurch Winkelabweichungen zwischen den beiden Achsstummeln beziehungsweise Abschnitten der Längsachse, die sich in Folge von Fertigungstoleranzen und Belastungen in der Praxis ergeben, solcher Art ausgeglichen werden, dass hierdurch keine Erhöhung der Geräuschemission der Fördereinrichtung sich ergeben.

Dabei ist es besonders bevorzugt, wenn die erste biegeelastische Kupplung räumlich im Bereich zwischen der Antriebseinheit und dem erstem Achsstummel angeordnet ist und die zweite biegeelastische Kupplung räumlich im Bereich zwischen der Antriebseinheit und dem zweitem Achsstummel angeordnet ist. Diese Anordnung der Achsstummel entkoppelt in idealer Weise die Antriebseinheit von jeglichen Belastungseinflüssen und erlaubt eine von Querkräften freie Rotation der Antriebswelle und Übertragung des Drehmoments über die Antriebswelle auf dem Trommelkörper.

Noch weiter ist es bevorzugt, wenn der erste und der zweite Abschnitt der Längsachse in einem radial unbelasteten Zustand des Trommelkörpers koaxial zueinander verlaufen und bei radialer Belastung des Trommelkörpers in einem stumpfen Winkel zueinander verlaufen und der durch den stumpfen Winkel ausgebildete Winkelversatz durch die erste und zweite biegeelastische Kupplung aufgenommen wird, sodass das durch die radiale Belastung auf die Antriebseinheit ausgeübte Biegemoment geringer ist als das durch die radiale Belastung auf den Trommelkörper ausgeübte Beigemoment. Diese Konstruktionsform setzt in vorteilhafter Weise die Möglichkeiten der ersten und zweiten biegeelastischen Kupplung um, indem ein Winkelversatz in Gestalt des stumpfen Winkels zugelassen wird und die Dimensionierung der Bauteile gegenüber den maximal zulässigen Belastungsfällen für die Fördereinrichtung unter Berücksichtigung dieser zulässigen Winkelabweichung erfolgt.

Schließlich ist ein weiterer Aspekt der Erfindung eine Fördereinrichtung, die weiterhin einen zweiten Trommelkörper umfasst, der auf einer zweiten Achse gelagert ist, wobei der zweite Trommelkörper beabstandet, bevorzugt parallel beabstandet zum ersten Trommelkörper liegt. Bestandteil dieser Anordnung ist weiterhin ein Endlosförderband, das zwischen dem ersten und zweiten Trommelkörper gespannt ist und eine Spanneinrichtung zum Spannen dieses Endlosförderbandes. Die Spanneinrichtung, die beispielsweise in Form einer Exzenterspanneinrichtung für die erste oder die zweite Achse, einer Befestigung in einem Langloch oder auch einer Auswahl an Befestigungsöffnungen für die erste oder zweite Achse realisiert sein kann, ermöglicht es, den Abstand zwischen der Längsachse des ersten Trommelkörpers und der Längsachse des zweiten Trommelkörpers solcher Art zu verändern, dass das Endlosförderband, welches die beiden Trommelkörper umschlingt, hierdurch gespannt wird. Durch eine solche Spannung wird ein zuverlässiger Reibschluss zwischen Trommelkörper und Endlosförderband erzielt und es kann durch die Anordnung ein Artikel auf der Förderbandoberfläche getragen und gefördert werden. Insbesondere durch die Spanneinrichtung unterliegt diese Anordnung aber hohen radialen Kräften im Bereich der beiden Trommelkörper. Diese radialen Kräfte wirken flächig auf die Trommelkörper ein und bewirken eine Biegekraft, die etwa mittig am Trommelkörper angreift und eine Biegung der Längsachse des Trommelkörpers nach sich zieht. Diese Biegung wird durch die erfindungsgemäße Förderanordnung in wirksamer Weise von der Antriebseinheit entkoppelt und hat dadurch in dieser Anordnung keine Steigerung der Geräuschemission der Förderanordnung zur Folge.

Bevorzugte Ausführungsformen werden anhand der beiliegenden Figuren erläutert. Es zeigen:
Figur 1 eine perspektivische, teilweise explodierte Ansicht einer ersten Ausführungsform der erfindungsgemäßen Fördereinrichtung,und
Figur 2 eine längsgeschnittene Ansicht der Ausführungsform gemäß Figur 1.

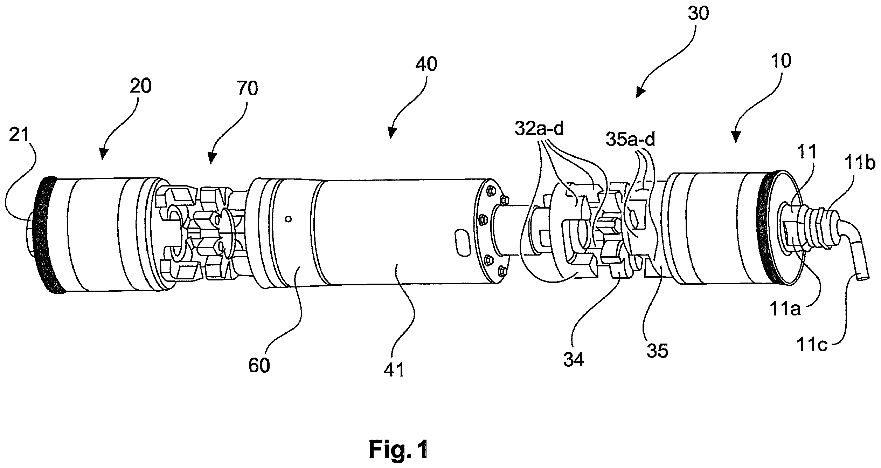

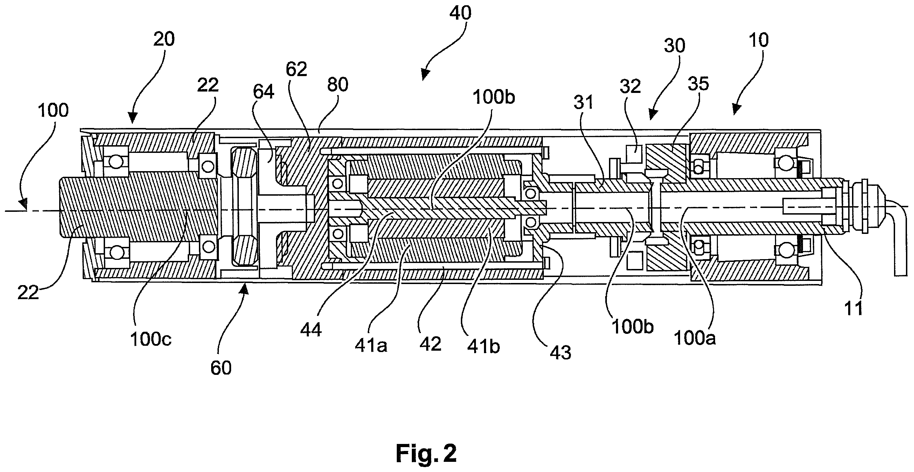

Bezugnehmend zunächst auf Figur 1 und 2 weist eine erfindungsgemäße Fördereinrichtung in der Ausführung als Trommelmotor eine erste stirnseitige Lagereinrichtung 10 und eine zweite, hierzu gegenüberliegende stirnseitige Lagereinrichtung 20 auf. Die beiden stirnseitigen Lagereinrichtungen 10 und 20 dienen dazu, einen Trommelkörper 80, der ein im Wesentlichen zylindrisches Rohr darstellt (in Figur 1 nicht abgebildet) aufzunehmen und drehbar um eine Längsachse 100 zu lagern.

Aus der ersten stirnseitigen Lagereinheit 10 erstreckt sich nach außen durch die Stirnseite des Trommelmotors ein erster Achsstummel 11, der als Hohlachse ausgebildet ist. Der hohle Achsstummel 11 weist nach Art von Schlüsselflächen ausgebildete Planflächen 11a auf, die gemeinsam mit Befestigungsmitteln in Form einer Schraubmutter 11b es ermöglichen, den Achsstummel 11 in einem Rahmengestell drehmomentfest zu befestigen. Eine Kabelzuleitung 11c ist durch den Hohlraum des Achsstummels 11 geführt und dient der Energieversorgung und Steuerung des Trommelmotors. An der gegenüberliegenden Stirnseite erstreckt sich in ähnlicher Weise ein Achsstummel 21 durch die Stirnseite nach außen und weist wiederum Befestigungsmittel zur drehmomentfesten Befestigung des zweiten Achsstummels 21 in einem Rahmengestell auf. Dieser zweite Achsstummel 21 ist nicht als Hohlachse ausgeführt, da keine Zuleitung durch diesen Achsstummel geführt werden muss.

Die Zuleitung 11c erstreckt sich durch den hohlen Achsstummel 11 durch eine erste Kupplungseinheit 30 hindurch bis zu einer Antriebseinheit 40. Die Antriebseinheit 40 umfasst einen Elektromotor 41 mit einem Stator 41a, der drehmomentfest in einem Motorgehäuse 42 befestigt ist. Der Stator 41a umgibt einen drehbar innerhalb des Motorgehäuses 42 gelagerten Rotor 41b. Der Elektromotor 41 mit Stator 41a und Rotor 41b ist als bürstenloser Asynchronmotor ausgeführt. Ebenso könnte der Motor 41 aber auch als Synchronmotor, über Schleifkontakte (Bürsten) kommutierter Motor oder jegliche andere Bauform eines Elektromotors ausgeführt sein.

Das Motorgehäuse 42 weist einen zur ersten stirnseitigen Lagereinheit 10 weisenden Stirndeckel 43 auf, in dem ein Kugellager zur Lagerung des Rotors angeordnet ist. Der Lagerdeckel 43 ist mit einem Achselement 31 drehmomentfest gekoppelt, dass sich ausgehend vom Lagerdeckel 43 in Richtung der ersten Stirnseitigen Lagereinheit 10 erstreckt. Das Achselement 31 ist mittels mehrerer Schrauben mit einem ersten Kupplungsträger 32 verbunden. Der erste Kupplungsträger 32 weist vier in axialer Richtung zur ersten stirnseitigen Lagereinheit 10 vorstehende Sektorabschnitte 32a-d auf, die in Querschnitt dreieckig ausgebildet sind und sich nach radial einwärts verjüngen.

In die Zwischenräume zwischen den vier Sektorabschnitten 32a-d greifen vier gleich geformte Sektorabschnitte 35a-d eines zweiten Kupplungsträgerelementes 35 ein. Zwischen den Sektorabschnitten 32a-d und 35a-d entsteht hierbei ein Spaltraum, der insgesamt acht Spalten zwischen diesen jeweils vier Sektorabschnitten umfasst. Ein sternförmiges Gummielement 54, welches ausgehend von einem zentralen Ring acht nach radial auswärts ragende Sektoren aufweist, ist in die Kupplung 30 so eingesetzt, dass es die Zwischenräume zwischen den jeweils vier Sektoren 32a-d und 35a-d ausfüllt. Hierdurch wird in Bezug auf ein Drehmoment um die Längsachse 100 eine weitestgehend steife Übertragung von dem zweiten Kupplungsträger über das Gummielement 34 auf den ersten Kupplungsträger oder umgekehrt erzielt. Demgegenüber ist die Kupplung 30 aufgrund dieser Geometrie in der Lage, bei Auftreten von Biegemomenten quer zur Längsachse keinen Widerstand entgegen zu setzen, sondern eine Winkelabweichung zwischen einem Längsachsenabschnitt 100a, um den sich der zweite Kupplungsträger rotationssymmetrisch anordnet gegenüber dem Längsachsabschnitt 100b, um den sich das erste Kupplungsträgerelement rotationssymmetrisch erstreckt, zuzulassen.

Der zweite Kupplungsträger 35 ist drehmomentfest mit dem ersten Achsstummel 11 gekoppelt. Die Baueinheit aus erstem Achsstummel 11, Kupplung 30 mit dem Achselement 31, Motordeckel 42 bewirkt somit eine Drehmomentabstützung des Motorgehäuses 42 mit dem darin drehmomentfest verankerten Stator 41a.

Der Rotor 41b ist um eine Motorausgangswelle 44 angeordnet, die durch die elektromagnetischen Kräfte zwischen Stator und Rotor in Rotation relativ zum Motorgehäuse 41 versetzt wird. Die Motorausgangswelle 44 ist mit einer Getriebeeingangswelle 64 eines Planetengetriebes 60 gekoppelt. Die Planetenzahnräder dieses Planetengetriebes sind über ihren Planetenträger mit einer Getriebeausgangswelle des Planetengetriebes 60 gekoppelt. Grundsätzlich sind als Variante zum Planetengetriebe auch andere Getriebeformen, beispielsweise Stirnradzahngetriebe, einsetzbar und es können andere Übersetzungsverhältnisse mit An- oder Abtrieb über das Sonnenrad, die Planetenräder oder das Hohlrad erfolgen.

Die Getriebeeingangs- und Getriebeausgangswelle sind in einem Getriebegehäuse 61 drehbar gelagert. Das Getriebegehäuse 62 ist drehmomentfest mit dem Motorgehäuse 42 verbunden und bildet gemeinsam mit dem Motorgehäuse die äußere Ummantelung der Antriebseinheit.

Die Getriebeausgangswelle 64 ist mit einer zweiten biegeelastischen Kupplung 70 gekoppelt, welche die Getriebeausgangswelle mit einem Verbindungselement 22 der zweiten stirnseitigen Lagereinheit 20 koppelt. Die zweite biegeelastische Kupplung 30 weist ebenso wie die erste biegeelastische Kupplung 50 ein erstes Kupplungsträgerelement, ein zweites Kupplungsträgerelement mit jeweils daran vorspringenden Sektorabschnitten und ein sternförmiges Gummielement zur formschlüssigen Kraftübertragung zwischen diesen Sektorabschnitten auf und ist funktionell baugleich zu der ersten biegeelastischen Kupplung 30. Die zweite biegeelastische Kupplung 70 ist mittels dem zur zweiten stirnseitigen Lagereinheit 20 weisenden Kupplungsträgerelement mit dem Verbindungselement 22 drehmomentfest verschraubt und überträgt auf diese Weise die Drehbewegung des Rotors auf das Verbindungselement 22. Das Verbindungselement 22 ist mit dem Trommelkörper drehmomentfest verbunden und treibt daher den Trommelkörper mit der Drehbewegung des Rotors an. Das Verbindungselement 22 ist mittels zwei Kugellagern auf dem zweiten Achsstummel 21 drehbar gelagert, sodass eine Rotationsbewegung um die Längsachse 100 für das Verbindungselement 22 und den damit drehmomentfest verbundenen Trommelkörper möglich ist.

Das Funktionsprinzip des abgebildeten Trommelmotors gemäß Figuren 1 und 2 liegt somit darin, dass der Trommelkörper 80 mittels der ersten und zweiten Lagereinheit 10, 20 auf den Achsstummeln 11, 21 drehbar gelagert ist. Der Achsstummel 11 ist mittels der Kupplung 30 mit dem im Motorgehäuse befestigen Stator des Elektromotors 40 drehmomentfest verbunden. Winkelabweichungen der Antriebsachse bzw. des Abschnitts 100b der Längsachse im Bereich der Antriebseinheit zu dem Längsachsenabschnitt 100a im Bereich der ersten Lagereinheit 10 werden durch die Kupplung 30 zugelassen und bewirken keine Einwirkung von Biegekräften auf die Antriebseinheit 40. Der Rotor des Antriebsmotors 40 ist über das Getriebe 60 und die Kupplung 70 drehmomentfest mit dem Verbindungselement 22 und damit dem Trommelkörper 80 gekoppelt. Die in dem Elektromotor erzeugte Drehmomentwirkung zwischen Stator und Rotor kann daher in Abstützung über den Achsstummel 11 auf den Trommelkörper 80 übertragen werden. Winkelabweichungen zwischen der Antriebsachse 100b gegenüber dem im Bereich der zweiten Lagereinheit 20 verlaufenden Achsabschnitt 100c der Längsachse können durch die Kupplung 70 zugelassen werden und bewirken keine Biegekrafteinwirkung auf die Antriebseinheit 40 von der Getriebeseite. Durch diese beidseitige durch die Kupplungen 30 und 70 erzeugte Entkopplung des mittleren Abschnitts 100b der Längsachse gegenüber Winkelabweichungen der links- und rechtsseitgen Längsachsabschnitte 100a, c ist der Trommelmotor unempfindlich gegenüber Durchbiegungen, die durch radiale Krafteinwirkungen auf den Trommelmotor auftreten können und kann auch bei Einwirkung solcher hoher radialer Kräfte mit geringer Geräuschentwicklung betrieben werden.

## Patentansprüche

1. Fördereinrichtung, umfassend:
- Eine Achse (11,21), die sich entlang einer Längsachse (100) erstreckt,
- Einen Trommelkörper (80), der auf der Achse drehbar um die Längsachse gelagert ist,
- Eine Antriebseinheit (40) mit einem elektrischen Antriebsmotor, die innerhalb des Trommelkörpers angeordnet ist und der einen Rotor (41b) und einen Stator (41a) umfasst, der Rotor mit einer um eine Antriebsachse drehbar gelagerten Antriebsausgangswelle (44) drehmomentfest gekoppelt ist und der Stator eine Drehmomentstütze darstellt und mit der Achse drehmomentfest gekoppelt ist,
- Ein Verbindungselement, das innerhalb des Trommelkörpers angeordnet ist und drehmomentfest mit dem Trommelkörper und der Antriebsausgangswelle des Antriebsmotors gekoppelt ist,
**dadurch gekennzeichnet, dass**
zwischen die Drehmomentstütze (31) und die Achse (11) eine erste biegeelastische Kupplung (30) eingesetzt ist, und dass zwischen die Antriebsausgangswelle (44) und den Trommelkörper eine zweite biegeelastische Kupplung (70) eingesetzt ist.

2. Fördereinrichtung nach Anspruch 1,
**dadurch gekennzeichnet, dass** die erste biegeelastische Kupplung ausgebildet ist um bei Beaufschlagung mit einem Drehmoment von 100Nm um eine senkrecht zur Antriebsachse liegende Querachse einen elastischen Winkelversatz um die Querachse auszuführen, der größer ist als ein Winkelversatz um die Antriebsachse bei Aufbringen desselben Drehmoments um die Antriebsachse.

3. Fördereinrichtung nach Anspruch 1 oder 2,
**dadurch gekennzeichnet, dass** die zweite biegeelastische Kupplung ausgebildet ist um bei Beaufschlagung mit einem Drehmoment von 100Nm um eine senkrecht zur Antriebsachse liegende Querachse einen elastischen Winkelversatz um die Querachse auszuführen, der größer ist als ein Winkelversatz um die Antriebsachse bei Aufbringen desselben Drehmoments um die Antriebsachse.

4. Fördereinrichtung einem der vorhergehenden Ansprüche,
**dadurch gekennzeichnet, dass**
- die Antriebseinheit ein Getriebe umfasst, welches eine Getriebeausgangswelle aufweist
- der Antriebsmotor eine Motorausgangswelle aufweist, die mit einer Getriebeeingangswelle gekoppelt ist und
- die Getriebeausgangswelle mit dem Verbindungselement gekoppelt ist.

5. Fördereinrichtung nach Anspruch 4,
**dadurch gekennzeichnet, dass** die zweite biegeelastische Kupplung zwischen die Getriebeausgangswelle und das Verbindungselement gekoppelt ist.

6. Fördereinrichtung nach Anspruch 4,
**dadurch gekennzeichnet, dass** die zweite biegeelastische Kupplung zwischen die Motorausgangswelle und die Getriebeeingangswelle gekoppelt ist.

7. Fördereinrichtung nach Anspruch 6,
**dadurch gekennzeichnet, dass** das Getriebe ein Getriebegehäuse aufweist, in dem die Getriebeeingangswelle drehbar gelagert ist, und dass das Getriebegehäuse mit einem Motorgehäuse des Antriebsmotors mittels einer dritten biegeelastischen Kupplung drehmomentfest verbunden ist.

8. Fördereinrichtung nach einem der vorhergehenden Ansprüche,
**dadurch gekennzeichnet, dass** die erste, zweite und/oder dritte biegeelastische Kupplung ein Gummielement zur Drehmomentübertragung um die Antriebsachse aufweist.

9. Fördereinrichtung nach Anspruch 8,
**dadurch gekennzeichnet, dass** das Gummielement formschlüssig mit einem Kupplungseingangsträger und einem Kupplungsausgangsträger zur Drehmomentübertragung gekoppelt ist.

10. Fördereinrichtung nach Anspruch 8 oder 9,
**dadurch gekennzeichnet, dass** das Gummielement eine Mehrzahl von über einen Umfang der Kupplung verteilte Sektoren aufweist, die jeweils eine erste senkrecht zur Umfangsrichtung ausgerichtete Kontaktfläche und eine zweite senkrecht zur Umfangsrichtung ausgerichtete Kontaktfläche aufweisen und dass die erste Kontaktfläche an einer korrespondierenden Fläche des Kupplungseingangsträgers anliegt und die zweite Kontaktfläche an einer korrespondierenden Fläche des Kupplungsausgangsträgers anliegt.

11. Fördereinrichtung nach einem der vorhergehenden Ansprüche 8-10,
**dadurch gekennzeichnet, dass** die Sektoren des Gummielements miteinander zu einem einstückigen Gummielement verbunden sind.

12. Fördereinrichtung nach einem der vorhergehenden Ansprüche,
**dadurch gekennzeichnet, dass** die Achse
- einen ersten Achsstummel umfasst, der an einer ersten Stirnseite des Trommelkörpers aus dem Trommelkörper herausragt und auf dem der Trommelkörper um einen ersten Abschnitt der Längsachse drehbar gelagert ist, und
- einen zweiten Achsstummel aufweist, der an einer der ersten Stirnseite gegenüberliegenden zweiten Stirnseite des Trommelkörpers aus dem Trommelkörper herausragt und auf dem der Trommelkörper um einen zweiten Abschnitt der Längsachse drehbar gelagert ist, und
dass die erste biegeelastische Kupplung zwischen die Drehmomentstütze und den ersten Achsstummel eingesetzt ist und dass die zweite biegeelastische Kupplung zwischen die Antriebsausgangswelle und den Trommelkörper eingesetzt ist.

13. Fördereinrichtung nach Anspruch 12,
**dadurch gekennzeichnet, dass** die erste biegeelastische Kupplung räumlich im Bereich zwischen der Antriebseinheit und dem ersten Achsstummel angeordnet ist und die zweite biegeelastische Kupplung räumlich im Bereich zwischen der Antriebseinheit und dem zweitem Achsstummel angeordnet ist.

14. Fördereinrichtung nach Anspruch 12 oder 13,
**dadurch gekennzeichnet, dass** die erste und die zweite Stummelachse in einem radial unbelasteten Zustand des Trommelkörpers koaxial zueinander verlaufen und bei radialer Belastung des Trommelkörpers in einem stumpfen Winkelzueinander verlaufen und der durch den stumpfen Winkel ausgebildete Winkelversatz durch die erste und zweite biegeelastische Kupplung aufgenommen wird, sodass das durch die radiale Belastung auf die Antriebseinheit ausgeübte Biegemoment geringer ist als das durch die radiale Belastung auf den Trommelkörper ausgeübte Beigemoment.

15. Fördereinrichtung nach einem der vorhergehenden Ansprüche,
umfassend einen zweiten Trommelkörper, der von dem Trommelkörper beabstandet und drehbar auf einer zweiten Achse gelagert ist, ein Endlosförderband, welches um den Trommelkörper und den zweiten Trommelkörper umlaufend angeordnet ist und eine Spanneinrichtung zum Spannen des Endlosförderbands.

## Claims

1. Conveying device, comprising:
- an axle (11, 21) which extends along a longitudinal axis (100),
- a drum body (80) which is mounted on the axle such that it can rotate about the longitudinal axis,
- a drive unit (40) having an electric drive motor, which is arranged inside the drum body and which comprises a rotor (41b) and a stator (41a), the rotor is coupled in a torque-transmitting manner to an drive output shaft (44) that is mounted such that it can rotate about a drive axle, and the stator represents a torque support and is coupled to the axle in a torque-resistant manner,
- a connecting element, which is arranged inside the drum body and is coupled in a torque-transmitting manner to the drum body and the drive output shaft of the drive motor,
**characterized in that**
a first flexible coupling (30) is inserted between the torque support (31) and the axle (11), and **in that** a second flexible coupling (70) is inserted between the drive output shaft (44) and the drum body.

2. Conveying device according to Claim 1,
**characterized in that** the first flexible coupling is designed to execute an elastic angular offset about the transverse axis when a torque of 100 Nm is applied about a transverse axis located at right angles to the drive axle, the angular offset being greater than an angular offset about the drive axle when the same torque is applied around the drive axle.

3. Conveying device according to Claim 1 or 2,
**characterized in that** the second flexible coupling is designed to execute an elastic angular offset about the transverse axis when a torque of 100 Nm is applied about a transverse axis located at right angles to the drive axle, the angular offset being greater than an angular offset about the drive axle when the same torque is applied around the drive axle.

4. Conveying device according to one of the preceding claims,
**characterized in that**
- the drive unit comprises a transmission which has a transmission output shaft,
- the drive motor has a motor output shaft which is coupled to a transmission input shaft, and
- the transmission output shaft is coupled to the connecting element.

5. Conveying device according to Claim 4,
**characterized in that** the second flexible coupling is coupled between the transmission output shaft and the connecting element.

6. Conveying device according to Claim 4,
**characterized in that** the second flexible coupling is coupled between the motor output shaft and the transmission input shaft.

7. Conveying device according to Claim 6,
**characterized in that** the transmission has a transmission housing in which the transmission input shaft is rotatably mounted, and **in that** the transmission housing is connected in a torque-resistant manner to a motor housing of the drive motor by means of a third flexible coupling.

8. Conveying device according to one of the preceding claims,
**characterized in that** the first, second and/or third flexible coupling has a rubber element for transmitting torque about the drive axle.

9. Conveying device according to Claim 8,
**characterized in that** the rubber element is coupled in a form-fitting manner to a coupling input support and a coupling output support for the torque transmission.

10. Conveying device according to Claim 8 or 9,
**characterized in that** the rubber element has a plurality of sectors distributed over a circumference of the coupling, which each have a first contact surface oriented at right angles to the circumferential direction and a second contact surface oriented at right angles to the circumferential direction, and **in that** the first contact surface rests on a corresponding surface of the coupling input support and the second contact surface rests on a corresponding surface of the coupling output support.

11. Conveying device according to one of preceding Claims 8-10,
**characterized in that** the sectors of the rubber element are connected to one another to form a one-piece rubber element.

12. Conveying device according to one of the preceding claims,
**characterized in that** the axle
- comprises a first stub axle, which projects out of the drum body at a first end face of the drum body and on which the drum body is mounted such that it can rotate about a first section of the longitudinal axis, and
- has a second stub axle, which projects out of the drum body at a second end face of the drum body, opposite the first end face, and on which the drum body is mounted such that it can rotate about a second section of the longitudinal axis, and
**in that** the first flexible coupling is inserted in between the torque support and the first stub axle and **in that** the second flexible coupling is inserted in between the drive output shaft and the drum body.

13. Conveying device according to Claim 12,
**characterized in that** the first flexible coupling is arranged spatially in the region between the drive unit and the first stub axle, and the second flexible coupling is arranged spatially in the region between the drive unit and the second stub axle.

14. Conveying device according to Claim 12 or 13,
**characterized in that** the first and the second axle stub run coaxially with respect to each other when the drum body is in a radially unloaded state and run at an obtuse angle with respect to each other when the drum body is loaded radially, and the angular offset formed by the obtuse angle is accommodated by the first and second flexible coupling, so that the bending moment exerted on the drive unit by the radial loading is lower than the bending moment exerted on the drum body by the radial loading.

15. Conveying device according to one of the preceding claims, comprising a second drum body, which is mounted at a distance from the drum body and is rotatably mounted on a second axle, an endless conveyor belt, which is arranged to run around the drum body and the second drum body, and a tensioning device for tensioning the endless conveyor belt.

## Revendications

1. Dispositif de transport, comprenant :
- un axe (11, 21) qui s'étend le long d'un axe longitudinal (100),
- un corps de tambour (80) qui est monté sur l'axe de manière rotative autour de l'axe longitudinal,
- une unité d'entraînement (40) avec un moteur d'entraînement électrique, qui est agencée à l'intérieur du corps de tambour et qui comprend un rotor (41b) et un stator (41a), le rotor étant couplé de manière solidaire en couple de rotation à un arbre de sortie d'entraînement (44) monté de manière rotative autour d'un axe d'entraînement et le stator constituant un soutien de couple de rotation et étant couplé de manière solidaire en couple de rotation à l'axe,
- un élément de liaison qui est agencé à l'intérieur du corps de tambour et couplé de manière solidaire en couple de rotation au corps de tambour et à l'arbre de sortie d'entraînement du moteur d'entraînement,
**caractérisé en ce que**
un premier accouplement élastique en flexion (30) est inséré entre le soutien de couple de rotation (31) et l'axe (11), et **en ce qu'**un deuxième accouplement élastique en flexion (70) est inséré entre l'arbre de sortie d'entraînement (44) et le corps de tambour.

2. Dispositif de transport selon la revendication 1, **caractérisé en ce que** le premier accouplement élastique en flexion est configuré pour, lorsqu'il est soumis à un couple de rotation de 100 Nm autour d'un axe transversal perpendiculaire à l'axe d'entraînement, effectuer un décalage angulaire élastique autour de l'axe transversal qui est supérieur à un décalage angulaire autour de l'axe d'entraînement lors de l'application du même couple de rotation autour de l'axe d'entraînement.

3. Dispositif de transport selon la revendication 1 ou 2, **caractérisé en ce que** le deuxième accouplement élastique en flexion est configuré pour, lorsqu'il est soumis à un couple de rotation de 100 Nm autour d'un axe transversal perpendiculaire à l'axe d'entraînement, effectuer un décalage angulaire élastique autour de l'axe transversal qui est supérieur à un décalage angulaire autour de l'axe d'entraînement lors de l'application du même couple de rotation autour de l'axe d'entraînement.

4. Dispositif de transport selon l'une quelconque des revendications précédentes, **caractérisé en ce que**
- l'unité d'entraînement comprend une transmission qui présente un arbre de sortie de transmission,
- le moteur d'entraînement présente un arbre de sortie de moteur qui est couplé à un arbre d'entrée de transmission et
- l'arbre de sortie de transmission est couplé à l'élément de liaison.

5. Dispositif de transport selon la revendication 4, **caractérisé en ce que** le deuxième accouplement élastique en flexion est couplé entre l'arbre de sortie de transmission et l'élément de liaison.

6. Dispositif de transport selon la revendication 4, **caractérisé en ce que** le deuxième accouplement élastique est couplé entre l'arbre de sortie de moteur et l'arbre d'entrée de transmission.

7. Dispositif de transport selon la revendication 6, **caractérisé en ce que** la transmission présente un carter de transmission dans lequel l'arbre d'entrée de transmission est monté de manière rotative, et **en ce que** le carter de transmission est relié de manière solidaire en couple de rotation à un carter de moteur du moteur d'entraînement au moyen d'un troisième accouplement élastique en flexion.

8. Dispositif de transport selon l'une quelconque des revendications précédentes, **caractérisé en ce que** le premier, le deuxième et/ou le troisième accouplement élastique en flexion présente un élément en caoutchouc pour la transmission du couple de rotation autour de l'axe d'entraînement.

9. Dispositif de transport selon la revendication 8, **caractérisé en ce que** l'élément en caoutchouc est couplé par complémentarité de forme à un support d'entrée d'accouplement et à un support de sortie d'accouplement pour la transmission du couple de rotation.

10. Dispositif de transport selon la revendication 8 ou 9, **caractérisé en ce que** l'élément en caoutchouc présente une pluralité de secteurs répartis sur une circonférence de l'accouplement, qui présentent chacun une première surface de contact orientée perpendiculairement à la direction circonférentielle et une deuxième surface de contact orientée perpendiculairement à la direction circonférentielle, et **en ce que** la première surface de contact est en appui contre une surface correspondante du support d'entrée d'accouplement et la deuxième surface de contact est en appui contre une surface correspondante du support de sortie d'accouplement.

11. Dispositif de transport selon l'une quelconque des revendications 8 à 10 précédentes, **caractérisé en ce que** les secteurs de l'élément en caoutchouc sont reliés entre eux pour former un élément en caoutchouc monobloc.

12. Dispositif de transport selon l'une quelconque des revendications précédentes, **caractérisé en ce que** l'axe
- comprend un premier bout d'axe qui fait saillie du corps de tambour sur un premier côté frontal du corps de tambour et sur lequel le corps de tambour est monté de manière rotative autour d'une première section de l'axe longitudinal, et
- un deuxième bout d'axe qui fait saillie du corps de tambour sur un deuxième côté frontal du corps de tambour opposé au premier côté frontal et sur lequel le corps de tambour est monté de manière rotative autour d'une deuxième section de l'axe longitudinal, et
**en ce que** le premier accouplement élastique en flexion est inséré entre le soutien de couple de rotation et le premier bout d'axe et **en ce que** le deuxième accouplement élastique en flexion est inséré entre l'arbre de sortie d'entraînement et le corps de tambour.

13. Dispositif de transport selon la revendication 12, **caractérisé en ce que** le premier accouplement élastique en flexion est agencé dans l'espace dans la zone entre l'unité d'entraînement et le premier bout d'axe et le deuxième accouplement élastique en flexion est agencé dans l'espace dans la zone entre l'unité d'entraînement et le deuxième bout d'axe.

14. Dispositif de transport selon la revendication 12 ou 13, **caractérisé en ce que** le premier et le deuxième axes de bout s'étendent coaxialement l'un par rapport à l'autre dans un état radialement non chargé du corps de tambour et s'étendent l'un par rapport à l'autre selon un angle obtus lorsque le corps de tambour est chargé radialement et le décalage angulaire formé par l'angle obtus est absorbé par le premier et le deuxième accouplement élastique en flexion, de telle sorte que le couple de flexion exercé par la charge radiale sur l'unité d'entraînement est inférieur au couple de flexion exercé par la charge radiale sur le corps de tambour.

15. Dispositif de transport selon l'une quelconque des revendications précédentes, comprenant un deuxième corps de tambour espacé du corps de tambour et monté de manière rotative sur un deuxième axe, une bande de transport sans fin agencée de manière à tourner autour du corps de tambour et du deuxième corps de tambour, et un dispositif de tension pour tendre la bande de transport sans fin.
